# EUROPEAN PATENT SPECIFICATION

(11) **EP 2 842 732 B1**
(45) Date of publication and mention of the grant of the patent: **05.09.2018**
(21) Application number: 14160938.8
(22) Date of filing: 20.03.2014
(51) Int. Cl.: B32B 5/00, B32B 5/02, B32B 5/06, B32B 5/12, B32B 5/14, B32B 5/22, B32B 5/26, B32B 7/00, B32B 7/02, B32B 7/04, B32B 7/10, B32B 27/00, B32B 27/02, B32B 27/08, B32B 27/12, B32B 27/32, B32B 27/36, B32B 3/00, B32B 3/06, D04H 1/46, D04H 1/544

(54) **Nonwoven fabric composite and method for making the same**
Vliesverbundstoff und Herstellungsverfahren dafür
Composite de tissu non-tissé et son procédé de fabrication

(30) Priority: 30.08.2013 TW 102131252
(43) Date of publication of application: 04.03.2015
(73) Proprietor: Kang Na Hsiung Enterprise Co., Ltd., Tainan City 72256 (TW)
(72) Inventor: Tai, Jung-Chi, 72256 Tainan City (TW); Yang, Ho-Hsi, 72256 Tainan City (TW); Su, Chien-Chung, 72256 Tainan City (TW)
(74) Representative: Bressel, Burkhard

(56) References cited:
- EP-A1- 1 156 147
- US-A- 5 886 306
- US-A1- 2004 084 134
- US-A1- 2005 148 268
- US-B1- 6 273 978

## Description

This invention relates to a nonwoven fabric composite, more particularly to a nonwoven fabric composite that can provide good liquid absorption and enhanced physical properties (such as tensile strength, elongation, etc.) in both machine and cross-machine directions, and a method for making the same.

US 2005/0148268 A1 discloses a nonwoven composite fabric comprising at least two layers from a carded web, spun-bonded web, meltblown web, and air-laid web. The fabric is taught to be used as wet wipes, clothing interliner, loop of a hook-and-loop fastener, filter media, or shoe material.

One of the inventors of this application has proposed a process for producing a nonwoven composite fabric in US patent no. 6273978. Conventional nonwoven composite fabrics or fabric composites, such as that made by the process of said US patent, have the drawback that there is a relatively large difference between tensile strength in the machine direction and tensile strength in the cross-machine direction, and are thus likely to deform in a state of use.

Therefore, an object of the present invention is to provide a nonwoven fabric composite that can provide good liquid absorption and that is unlikely to deform in a state of use, and a method for making the same.

According to the first aspect of this invention, a nonwoven fabric composite includes: a spunbond nonwoven fabric layer which extends in a machine direction and a cross-machine direction, and which has a plurality of bonded fibers; an air-laid nonwoven pulp web layer which has a plurality of pulp fibers, and which overlies the spunbond nonwoven fabric layer, at least some of the pulp fibers being entangled with some of the bonded fibers, the spunbond nonwoven fabric layer and the air-laid nonwoven pulp web layer cooperatively forming an inner laminate; and a pair of nonwoven carded fiber web layers, each of which has a plurality of carded fibers that are carded along the machine direction and that have a fiber length greater than 10 mm, and which sandwich therebetween the inner laminate, at least some of the carded fibers being entangled with some of the pulp fibers, at least some of the carded fibers being entangled with some of the bonded fibers such that a ratio of tensile strength of the nonwoven fabric composite in the machine direction to tensile strength of the nonwoven fabric composite in the cross-machine direction is not greater than 4.

According to the second aspect of this invention, a method for making a nonwoven fabric composite includes the steps of: (a) providing a spunbond nonwoven fabric layer which extends in a machine direction and a cross-machine direction, and which is formed to have a plurality of bonded fibers; (b) causing an air-laid nonwoven pulp web layer to overlie the spunbond nonwoven fabric layer so as to obtain an intermediate stack, the air-laid nonwoven pulp web layer having a plurality of pulp fibers; (c) sandwiching the intermediate stack between a pair of nonwoven carded fiber web layers to obtain a sandwich laminate, each of the nonwoven carded fiber web layers having a plurality of carded fibers that are carded in the machine direction and that have a fiber length greater than 10 mm; and (d) subjecting the sandwich laminate to a fluid jet treatment to effect mechanical entanglement among the bonded fibers, the pulp fibers, and the carded fibers, thereby obtaining a nonwoven fabric composite which has a ratio of tensile strength in the machine direction to tensile strength in the cross-machine direction not greater than 4.

Other features and advantages of the present invention will become apparent in the following detailed description of the preferred embodiment of the invention, with reference to the accompanying drawing, in which:

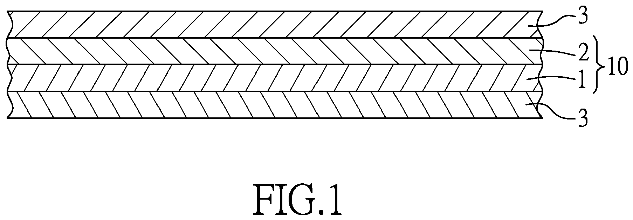

Fig. 1 is a fragmentary cross-sectional view of the preferred embodiment of a nonwoven fabric composite according to this invention.

Referring to Fig. 1, the preferred embodiment of a nonwoven fabric composite according to this invention is shown to include a spunbond nonwoven fabric layer 1, an air-laid nonwoven pulp web layer 2, and a pair of nonwoven carded fiber web layers 3. The nonwoven fabric composite has a mass density ranging from 25 g/m² to 150 g/m², and a thickness ranging from 0.1 mm to 10 mm.

The spunbond nonwoven fabric layer 1 can be made by any conventional methods. For example, the spunbond nonwoven fabric layer 1 is made by subjecting a polymer to processes of melting, extruding, drawing, and cooling to obtain a plurality of fibers, followed by bonding the fibers using thermal bonding, chemical bonding, mechanical bonding, etc. The polymer can be, but is not limited to, polyethylene, polypropylene, polyethylene terephthalate, or a combination of polyethylene and polypropylene.

In the preferred embodiment, the spunbond nonwoven fabric layer 1 extends in a machine direction and a cross-machine direction, and has a plurality of bonded fibers. Preferably, the spunbond nonwoven fabric layer 1 has a weight percent ranging from 8 wt% to 50 wt% based on the total weight of the nonwoven fabric composite.

The air-laid nonwoven pulp web layer 2 has a plurality of pulp fibers, and overlies the spunbond nonwoven fabric layer 1. At least some of the pulp fibers are entangled with some of the bonded fibers. The spunbond nonwoven fabric layer 1 and the air-laid nonwoven pulp web layer 2 cooperatively form an inner laminate 10. The pulp fibers can be paper pulp fibers or wood pulp fibers . The pulp fibers have a fiber length ranging from 1 mm to 5 mm, and a fineness ranging from 0.1 denier to 10 denier. Preferably, the air-laid nonwoven pulp web layer 2 has a weight percent ranging from 5 wt% to 60 wt% based on the total weight of the nonwoven fabric composite.

Each of the nonwoven carded fiber web layers 3 has a plurality of carded fibers which are carded along the machine direction and which have a fiber length greater than 10 mm. In this embodiment, the carded fibers have a fiber length ranging from 10 mm to 76 mm, and a fineness ranging from 1 denier to 6 denier. The nonwoven carded fiber web layers 3 have a weight percent ranging from 10 wt% to 80 wt% based on the total weight of the nonwoven fabric composite. The carded fibers are made from natural fibers, chemical fibers or combinations thereof. The natural fibers can be seed fibers (e.g., cotton), bast fibers (e.g., flax, hemp), leaf fibers (e.g., manila hemp), fruit fibers (e.g., coconut), animal fibers (e.g., silk, animal skin), etc. The chemical fibers can be regenerated fibers (e.g., rayon), semi-synthetic fibers (e.g., cellulose acetate), and synthetic fibers. The synthetic fibers can be made from, but are not limited to, polyethylene, polypropylene, polyethylene terephthalate, polyamide, etc. Preferably, the carded fibers are made from at least one material selected from the group consisting of polyethylene, polypropylene, polyethylene terephthalate, rayon, and cotton.

The nonwoven carded fiber web layers 3 sandwich therebetween the inner laminate 10. At least some of the carded fibers are entangled with some of the pulp fibers, and at least some of the carded fibers are entangled with some of the bonded fibers such that a ratio of tensile strength of the nonwoven fabric composite in the machine direction to tensile strength of the nonwoven fabric composite in the cross-machine direction is not greater than 4. In this preferred embodiment, the ratio of the tensile strength of the nonwoven fabric composite in the machine direction to the tensile strength of the nonwoven fabric composite in the cross-machine direction is not greater than 2.

A method for making the nonwoven fabric composite according to the preferred embodiment of this embodiment includes the following steps (a) to (d).

In step (a), a spunbond nonwoven fabric layer 1 is provided. The spunbond nonwoven fabric layer 1 extends in a machine direction and a cross-machine direction, and is formed to have a plurality of bonded fibers.

In step (b), an air-laid nonwoven pulp web layer 2 is disposed to overlie the spunbond nonwoven fabric layer 1 to obtain an intermediate stack. The air-laid nonwoven pulp web layer 2 has a plurality of pulp fibers.

In step (c), the intermediate stack is sandwiched between a pair of nonwoven carded fiber web layers 3 to obtain a sandwich laminate. Each of the nonwoven carded fiber web layers 3 has a plurality of carded fibers that are carded in the machine direction.

In step (d), the sandwich laminate is subjected to a fluid jet treatment to effect mechanical entanglement among the bonded fibers, the pulp fibers, and the carded fibers, thereby obtaining a nonwoven fabric composite which has a ratio of tensile strength in the machine direction to tensile strength in the cross-machine direction not greater than 4. In this preferred embodiment, the ratio of the tensile strength of the nonwoven fabric composite in the machine direction to the tensile strength of the nonwoven fabric composite in the cross-machine direction is not greater than 2. Preferably, the fluid jet treatment is a water jet treatment.

The method of the present invention will now be explained in more detail below by way of the following Example 1 and Comparative Example 1.

### <Example 1>

Paper pulp fibers (fiber length: 1 mm ∼ 5 mm) were entrained in a gas stream at a flow rate of 130 CMM (cubic meter per minute), and were then fed onto a spunbond nonwoven fabric layer which was moved along a machine direction at a rate of 50 M/min to form an air-laid nonwoven pulp web layer on the spunbond nonwoven fabric layer. The air-laid nonwoven pulp web layer extended in the machine direction and a cross-machine direction. The spunbond nonwoven fabric layer was made of polypropylene (PP), and had a mass density of 13 g/m². The air-laid nonwoven pulp web layer was heated at 135°C and was adhered to the spunbond nonwoven fabric layer by applying suction to a surface of the spunbond nonwoven fabric layer distal from the air-laid nonwoven pulp web layer, followed by passage of the air-laid nonwoven pulp web layer and the spunbond nonwoven fabric layer through a nip between a pair of pressing rollers, thereby obtaining an intermediate stack. A pair of nonwoven carded fiber web layers were advanced along the machine direction at a rate of 50 M/min to sandwich the intermediate stack therebetween to thereby form a sandwich laminate. Each of the nonwoven carded fiber web layers had a mass density of 22 g/m², and included a plurality of carded fibers that had a fiber length ranging from 10 mm to 76 mm, that were made from polyethylene terephthalate (PET), and that were carded along the machine direction. The sandwich laminate was advanced along the machine direction and subjected to a water jet treatment (water jet pressure: 50 bar), and was then dried to obtain a nonwoven fabric composite. The weight percentages of the materials used for forming the nonwoven fabric composite of Example 1 are shown in Table 1.

### <Comparative Example 1>

Paper pulp fibers (fiber length: 1 mm ∼ 5 mm) were entrained in a gas stream at a flow rate of 130 CMM (cubic meter per minute), and were then fed onto a first nonwoven carded fiber web layer which was moved along a machine direction at a rate of 50 M/min to form an air-laid nonwoven pulp web layer on the first nonwoven carded fiber web layer. The air-laid nonwoven pulp web layer was heated at 135°C and was adhered to the first nonwoven carded fiber web layer by applying suction to a surface of the first nonwoven carded fiber web layer distal from the air-laid nonwoven pulp web layer, followed by passage of the air-laid nonwoven pulp web layer and the first nonwoven carded fiber web layer through a nip between a pair of pressing rollers. Then, the second nonwoven carded fiber web layer was advanced along the machine direction at a rate of 50 M/min to overlie the air-laid nonwoven pulp web layer so as to obtain a laminate. The laminate was advanced along the machine direction and subjected to a water jet treatment (water jet pressure: 50 bar), and was then dried to obtain a nonwoven fabric composite. The weight percentages of the materials used for forming the nonwoven fabric composite of Comparative Example 1 are shown in Table 1.

The nonwoven fabric composites of Example 1 and Comparative Example 1 were subjected to the following tests, and the test results are shown in Table 1.

### <Mass density>

A nonwoven fabric composite to be tested was tested according to ASTM D3776-85 at a temperature of 23 ±0.5°C and a relative humidity of 65±2% under normal pressure.

### <Tensile strength>

A nonwoven fabric composite to be tested was cut into a piece of 150 mm x 25.4 mm, and a tensile strength at break was then measured according to ASTM D-1117.

### <Elongation>

A nonwoven fabric composite to be tested was cut into a piece of 150 mm x 25.4 mm, and elongation at break was then measured according to ASTM D-1117.

**Table 1**

| | | Example 1 | Comparative Example 1 |
|---|---|---|---|
| Nonwoven carded fiber web layers | PET (wt%) | 26 | 40 |
| Spunbond nonwoven fabric layer | PP (wt%) | 24 | - |
| Air-laid nonwoven pulp web layer | Paper pulp fiber (wt%) | 50 | 60 |
| Mass density (g/m²) | | 40.0 | 40.0 |
| Thickness (mm) | | 0.53 | 0.49 |
| Tensile strength in a machine direction (Kgf/25mm) | | 4.16 | 2.53 |
| Tensile strength in a cross-machine direction (Kgf/25mm) | | 3.82 | 0.61 |
| Elongation in a machine direction (%) | | 32 | 27.8 |
| Elongation in a cross-machine direction (%) | | 45 | 115 |
| MD/CD ratio* | | 1.09 | 4.15 |

| | | | |
|---|---|---|---|
| * MD/CD ratio means a ratio of tensile strength in the machine direction (MD) to tensile strength in the cross-machine direction (MD). | | | |

From the results shown in Table 1, the nonwoven fabric composite of Example 1 is better than that of Comparative Example 1 in tensile strength and elongation in both the machine direction and the cross-machine direction. Especially, the MD/CD ratio of the nonwoven fabric composite of Example 1 is smaller than that of Comparative Example 1. That is, the difference between tensile strength in the machine direction and tensile strength in the cross-machine direction in the nonwoven fabric composite of Example 1 is smaller. As such, the nonwoven fabric composite of Example 1 is less likely to deform when it is in a state of use.

## Claims

1. A nonwoven fabric composite comprising:
a spunbond nonwoven fabric layer (1) which extends in a machine direction and a cross-machine direction, and which has a plurality of bonded fibers;
an air-laid nonwoven pulp web layer (2) which has a plurality of pulp fibers, and which overlies said spunbond nonwoven fabric layer (1), at least some of said pulp fibers being entangled with some of said bonded fibers, said spunbond nonwoven fabric layer (1) and said air-laid nonwoven pulp web layer (2) cooperatively forming an inner laminate (10); and
a pair of nonwoven carded fiber web layers (3), each of which has a plurality of carded fibers that are carded along the machine direction and that have a fiber length greater than 10 mm, and which sandwich therebetween said inner laminate (10), at least some of said carded fibers being entangled with some of said pulp fibers, at least some of said carded fibers being entangled with some of said bonded fibers such that a ratio of tensile strength of said nonwoven fabric composite in the machine direction to tensile strength of said nonwoven fabric composite in the cross-machine direction is not greater than 4,
wherein the tensile strengths in machine and cross-machine directions are measured according to ASTM D-1117.

2. The nonwoven fabric composite of Claim 1, wherein said air-laid nonwoven pulp web layer (2) has a weight percent ranging from 5 wt% to 60 wt% based on the total weight of said nonwoven fabric composite.

3. The nonwoven fabric composite of Claim 1, wherein said spunbond nonwoven fabric layer (1) has a weight percent ranging from 8 wt% to 50 wt% based on the total weight of said nonwoven fabric composite.

4. The nonwoven fabric composite of Claim 1, wherein said nonwoven carded fiber web layers (3) have a weight percent ranging from 10 wt% to 80 wt% based on the total weight of said nonwoven fabric composite.

5. A method for making a nonwoven fabric composite, comprising the steps of:
(a) providing a spunbond nonwoven fabric layer (1) which extends in a machine direction and a cross-machine direction, and which is formed to have a plurality of bonded fibers;
(b) causing an air-laid nonwoven pulp web layer (2) to overlie the spunbond nonwoven fabric layer (1) so as to obtain an intermediate stack, the air-laid nonwoven pulp web layer having a plurality of pulp fibers;
(c) sandwiching the intermediate stack between a pair of nonwoven carded fiber web layers (3) to obtain a sandwich laminate, each of the nonwoven carded fiber web layers (3) having a plurality of carded fibers that are carded in the machine direction and that have a fiber length greater than 10 mm; and
(d) subjecting the sandwich laminate to a fluid jet treatment to effect mechanical entanglement among the bonded fibers, the pulp fibers, and the carded fibers, thereby obtaining a nonwoven fabric composite which has a ratio of tensile strength in the machine direction to tensile strength in the cross-machine direction not greater than 4,
wherein the tensile strengths in machine and cross-machine directions are measured according to ASTM D-1117.

6. The method of Claim 5, wherein the fluid jet treatment is a water jet treatment.

7. The method of Claim 5, wherein the air-laid nonwoven pulp web layer (2) has a weight percent ranging from 5 wt% to 60 wt% based on the total weight of the nonwoven fabric composite.

8. The method of Claim 5, wherein the spunbond nonwoven fabric (1) has a weight percent ranging from 8 wt% to 50 wt% based on the total weight of the nonwoven fabric composite.

9. The method of Claim 5, wherein the nonwoven carded fiber web layers (3) have a weight percent ranging from 10 wt% to 80 wt% based on the total weight of the nonwoven fabric composite.

## Patentansprüche

1. Faservliesverbundstoff umfassend:
eine Schicht (1) aus Spinnvliesstoff, die sich in Richtung einer Maschine sowie quer zur Richtung der Maschine erstreckt und die eine Vielzahl von verbundenen Fasern aufweist,
eine luftgelegte Schicht (2) aus einer Zellstoffvliesbahn, die eine Vielzahl von Zellstofffasern aufweist, und die die Schicht (1) aus Spinnvliesstoff überlagert, wobei zumindest einige der Zellstofffasern und einige der verbundenen Fasern miteinander verschränkt sind, wobei die Schicht (1) aus Spinnvliesstoff und die luftgelegte Schicht (2) aus einer Zellstoffvliesbahn zusammen ein inneres Laminat (10) bilden, und
ein Paar Schichten (3) aus kardierten Faservliesbahnen, die jeweils eine Vielzahl von kardierten Fasern aufweisen, die in Richtung der Maschine kardiert sind und die eine Faserlänge von mehr als 10 mm aufweisen und die das innere Laminat (10) sandwichartig zwischen sich aufnehmen, wobei zumindest einige der kardierten Fasern und einige der Zellstofffasern miteinander verschränkt sind, wobei zumindest einige der kardierten Fasern und einige der verbundenen Fasern miteinander verschränkt sind, so dass ein Verhältnis der Zugfestigkeit des Faservliesverbundstoffes in Richtung der Maschine relativ zu der Zugfestigkeit des Faservliesverbundstoffes quer zur Richtung der Maschine nicht größer als 4 ist,
wobei die Zugfestigkeiten in Richtung der Maschine und quer zur Richtung der Maschine gemäß ASTM-Standard D-1117 gemessen werden.

2. Faservliesverbundstoff nach Patentanspruch 1, wobei die luftgelegte Schicht (2) aus der Zellstoffvliesbahn einen Gewichtsprozentanteil von 5 Gew.-% bis 60 Gew.-%, bezogen auf das Gesamtgewicht des Faservliesverbundstoffes, hat.

3. Faservliesverbundstoff nach Patentanspruch 1, wobei die Schicht (1) aus Spinnvliesstoff einen Gewichtsprozentanteil von 8 Gew.-% bis 50 Gew.-%, bezogen auf das Gesamtgewicht des Faservliesverbundstoffes, hat.

4. Faservliesverbundstoff nach Patentanspruch 1, wobei die Schichten (3) aus kardierten Faservliesbahnen einen Gewichtsprozentanteil von 10 Gew.-% bis 80 Gew.-%, bezogen auf das Gesamtgewicht des Faservliesverbundstoffes, haben.

5. Verfahren zum Herstellen eines Faservliesverbundstoffes, umfassend die Schritte:
(a) Bereitstellen einer Schicht (1) aus Spinnvliesstoff, die sich in Richtung einer Maschine sowie quer zur Richtung der Maschine erstreckt und die so ausgebildet ist, dass sie eine Vielzahl von verbundenen Fasern aufweist;
(b) Veranlassen, dass eine luftgelegte Schicht (2) aus einer Zellstoffvliesbahn die Schicht (1) aus Spinnvliesstoff überlagert, so dass ein Zwischenstapel erhalten wird, wobei die luftgelegte Schicht aus der Zellstoffvliesbahn eine Vielzahl von Zellstofffasern aufweist;
(c) sandwichartiges Zusammenfügen des Zwischenstapels zwischen einem Paar Schichten (3) aus kardierten Faservliesbahnen, so dass ein Sandwichlaminat erhalten wird, wobei jede der Schichten (3) aus kardierten Faservliesbahnen eine Vielzahl von kardierten Fasern aufweist, die in Richtung der Maschine kardiert sind und die eine Faserlänge von mehr als 10 mm aufweisen; und
(d) Unterwerfen des Sandwichlaminats einer Fluidstrahlbehandlung, um ein mechanisches Verschränken der verbundenen Fasern, der Zellstofffasern und der kardierten Fasern miteinander zu erzielen, wodurch ein Faservliesverbundstoff erhalten wird, der ein Verhältnis der Zugfestigkeit in Richtung der Maschine relativ zu der Zugfestigkeit quer zur Richtung der Maschine von nicht größer als 4 hat,
wobei die Zugfestigkeiten in Richtung der Maschine und quer zur Richtung der Maschine gemäß ASTM-Standard D-1117 gemessen werden.

6. Verfahren nach Patentanspruch 5, bei dem die Fluidstrahlbehandlung eine Wasserstrahlbehandlung ist.

7. Verfahren nach Patentanspruch 5, bei dem die luftgelegte Schicht (2) aus der Zellstoffvliesbahn einen Gewichtsprozentanteil von 5 Gew.-% bis 60 Gew.-%, bezogen auf das Gesamtgewicht des Faservliesverbundstoffes, hat.

8. Verfahren nach Patentanspruch 5, bei dem die Schicht (1) aus Spinnvliesstoff einen Gewichtsprozentanteil von 8 Gew.-% bis 50 Gew.-%, bezogen auf das Gesamtgewicht des Faservliesverbundstoffes, hat.

9. Verfahren nach Patentanspruch 5, bei dem die Schichten (3) aus kardierten Faservliesbahnen einen Gewichtsprozentanteil von 10 Gew.-% bis 80 Gew.-%, bezogen auf das Gesamtgewicht des Faservliesverbundstoffes, haben.

## Revendications

1. Composite de tissu non-tissé comprenant :
une couche de tissu non-tissé filé-lié (1) qui s'étend dans un sens machine et un sens travers, et qui comporte une pluralité de fibres liées ;
une couche de matelas de pâte de non-tissé par voie aéraulique (2) qui comporte une pluralité de fibres de pâte, et qui se superpose à ladite couche de tissu non-tissé filé-lié (1), au moins certaines desdites fibres de pâte étant enchevêtrées avec certaines desdites fibres liées, ladite couche de tissu non-tissé filé-lié (1) et ladite couche de matelas de pâte de non-tissé par voie aéraulique (2) formant de façon coopérative un stratifié interne (10) ; et
une paire de couches de matelas de fibres cardées non-tissées (3), dont chacune comporte une pluralité de fibres cardées qui sont cardées le long du sens machine et qui ont une longueur de fibre supérieure à 10 mm, et qui prennent en sandwich entre elles ledit stratifié interne (10), au moins certaines desdites fibres cardées étant enchevêtrées avec certaines desdites fibres de pâte, au moins certaines desdites fibres cardées étant enchevêtrées avec certaines desdites fibres liées de sorte qu'un rapport entre la résistance à la traction dudit composite de tissu non-tissé dans le sens machine et la résistance à la traction dudit composite de tissu non-tissé dans le sens travers ne soit pas supérieur à 4,
dans lequel les résistances à la traction dans les sens machine et travers sont mesurées selon la norme ASTM D-1117.

2. Composite de tissu non-tissé selon la revendication 1, dans lequel ladite couche de matelas de pâte de non-tissé par voie aéraulique (2) a un pourcentage en poids allant de 5 % en poids à 60 % en poids par rapport au poids total dudit composite de tissu non-tissé.

3. Composite de tissu non-tissé selon la revendication 1, dans lequel ladite couche de tissu non-tissé filé-lié (1) a un pourcentage en poids allant de 8 % en poids à 50 % en poids par rapport au poids total dudit composite de tissu non-tissé.

4. Composite de tissu non-tissé selon la revendication 1, dans lequel lesdites couches de matelas de fibres cardées non-tissées (3) ont un pourcentage en poids allant de 10 % en poids à 80 % en poids par rapport au poids total dudit composite de tissu non-tissé.

5. Procédé de réalisation d'un composite de tissu non-tissé, comprenant les étapes suivantes :
(a) la fourniture d'une couche de tissu non-tissé filé-lié (1) qui s'étend dans un sens machine et un sens travers, et qui est formée pour avoir une pluralité de fibres liées ;
(b) le fait d'amener une couche de matelas de pâte de non-tissé par voie aéraulique (2) à se superposer à la couche de tissu non-tissé filé-lié (1) de façon à obtenir une pile intermédiaire, la couche de matelas de pâte de non-tissé par voie aéraulique ayant une pluralité de fibres de pâte ;
(c) le fait de prendre en sandwich la pile intermédiaire entre une paire de couches de matelas de fibres cardées non-tissées (3) pour obtenir un stratifié sandwich, chacune des couches de matelas de fibres cardées non-tissées (3) ayant une pluralité de fibres cardées qui sont cardées dans le sens machine et qui ont une longueur de fibre supérieure à 10 mm ; et
(d) le fait de soumettre le stratifié sandwich à un traitement par jet de fluide pour effectuer un enchevêtrement mécanique parmi les fibres liées, les fibres de pâte et les fibres cardées, obtenant ainsi un composite de tissu non-tissé qui a un rapport entre la résistance à la traction dans le sens machine et la résistance à la traction dans le sens travers non supérieur à 4,
dans lequel les résistances à la traction dans les sens machine et travers sont mesurées selon la norme ASTM D-1117.

6. Procédé selon la revendication 5, dans lequel le traitement par jet de fluide est un traitement par jet d'eau.

7. Procédé selon la revendication 5, dans lequel la couche de matelas de pâte de non-tissé par voie aéraulique (2) a un pourcentage en poids allant de 5 % en poids à 60 % en poids par rapport au poids total du composite de tissu non-tissé.

8. Procédé selon la revendication 5, dans lequel le tissu non-tissé filé-lié (1) a un pourcentage en poids allant de 8 % en poids à 50 % en poids par rapport au poids total du composite de tissu non-tissé.

9. Procédé selon la revendication 5, dans lequel les couches de matelas de fibres cardées non-tissées (3) ont un pourcentage en poids allant de 10 % en poids à 80 % en poids par rapport au poids total du composite de tissu non-tissé.
